# EUROPEAN PATENT APPLICATION

(11) **EP 4 527 736 A1**
(43) Date of publication of application: **26.03.2025**
(21) Application number: 23198304.0
(22) Date of filing: 19.09.2023
(51) Int. Cl.: B64D 11/00, B64D 13/06, B64D 11/04

(54) **GALLEY HEAT MANAGEMENT SYSTEM**

(71) Applicant: B/E Aerospace, Inc., Winston-Salem, NC 27105 (US)
(72) Inventor: DOUMA, Theodoor, Houten, 3992 AD (NL)
(74) Representative: Dehns

(57) **Abstract**

A vehicle galley heat management system (100), including a water vessel (102); at least one galley chiller unit (104); and a heat transfer system (106). The heat transfer system (106) being configured to transfer heat from the or each galley chiller unit (104) to the water vessel (102). The vehicle galley heat management system (100) enables the waste heat from the galley chiller unit(s) (104) to be transferred and used rather than wasted.

## Description

### Technical field

This disclosure relates to a heat management system for improving the cooling of galley chillers and for redistributing waste heat produced from galley chillers. More particularly, this disclosure relates to a heat management system for a vehicle galley, where space is often quite limited.

### Background

A galley is an area designed for the handling and/or preparation of food and/or drinks. For example, an aircraft galley is an area of the aircraft where the cabin crew can prepare meals and/or refreshments for the passengers and/or other crew members. Some foods and/or drinks needs to be stored at temperatures below ambient temperature and so galleys often include chiller units such as refrigerators and/or freezers. Galley chiller units are known to produce heat, and the more powerful the chiller unit, the more heat is likely to be produced. Vehicle galleys are generally small spaces and are often fitted out with compartments or units of a pre-defined or standardised size. Removing heat from chillers in such constrained spaces can be challenging.

In certain known vehicle galleys, multiple chillers are installed in a single galley area. The adjacent galley compartments restrict air flow behind and/or around the chiller units so that fans must be used to move the heat created by the chiller units away, i.e. the fans actively remove heat in an efficient manner. These fan units take up space and create noise. Cool air is pulled through and past the back of the chiller units where it warms up (thereby removing heat from the chillers) and is then blown into the galley area as waste heat.

### Summary

According to a first aspect of this disclosure there is provided a vehicle galley heat management system, the system comprising:
a water vessel;
at least one galley chiller unit; and
a heat transfer system;
wherein the heat transfer system is configured to transfer heat from the or each galley chiller unit to the water vessel.

The vehicle galley heat management system enables the waste heat from the galley chiller unit(s) to be transferred and used rather than wasted. The heat management system is configured to be installed in a vehicle galley. A further advantage of the heat transfer system is that the fans may no longer be required to remove heat from the chiller units as the heat can be moved away by the heat transfer system instead. Avoiding the need for fans means saving the cost, weight and power consumption that would otherwise be incurred by the fan while also reducing the overall noise in the galley as the heat transfer system can in many cases be much quieter or essentially silent. Whilst in some examples there may be a single galley chiller unit in a vehicle galley, in others there may be a plurality of galley chiller units installed in a vehicle galley. Therefore, in some examples the vehicle galley heat management system comprises one galley chiller unit, and in other examples it comprises two or more (a plurality of) galley chiller units.

It will be appreciated by the skilled person that chiller units in vehicle galleys may be specifically designed for compatibility with a galley compartment, so as to connect to specific electrical, water and installation points. Such connections may be standard or may be specific to a particular vehicle. The galley chiller units of the present disclosure may be supplied with the heat management system, or may be separate components to be installed into the galley and connected to the rest of the heat management system. In some examples, the at least one galley chiller unit may be replaceable, e.g. such that it can be installed in and removed from the galley as required without also removing the rest of the heat management system.

Galley chiller units are configured to cool an internal volume within the unit down to a desired temperature below ambient temperature (typically around 5 degrees centigrade for a fridge and below -10 degrees centigrade (or even colder) for a freezer). Galley chiller units generally comprise a condenser or radiator which is the mechanism for dissipating heat from the chiller and a fan configured to cool the condenser or radiator. Certain chiller units also have an evaporator and a compressor as is well known, although other refrigeration mechanisms are equally applicable. By removing the heat from the chiller(s) efficiently via the heat transfer system, the chiller unit may be designed to have a smaller condenser or radiator. The size of the condenser / radiator is typically selected to allow sufficient contact with ambient air to remove heat from the chiller unit. However, air is not a great heat conductor, so if the heat transfer system is designed to be more efficient at heat removal, the condenser / radiator can be reduced in size, thus further saving weight. The heat transfer system can move the heat away from the condenser and advantageously deliver it to the water vessel instead of simply releasing it as waste heat.

The water vessel acts as a reservoir of water that is heated via the heat transfer system. In some examples the water vessel may be used to provide heated water to sinks for example in a bathroom or kitchen. In some examples, the water vessel is configured to store water suitable for drinking. In such arrangements the water in the water vessel is heated via a heat exchanger so that the water remains isolated from any working fluid of the heat transfer system. In some examples, the vehicle galley heat management system further comprises a hot beverage maker configured to receive heated water from the water vessel. Example beverage makers include kettles and coffee makers, but it will be appreciated that any type of hot beverage maker may be used. In some examples the hot beverage maker has a direct plumbed connection to the water vessel and is operable to draw heated water from the water vessel into the hot beverage maker. The heat transferred from the galley chiller units can therefore be efficiently used for other purposes, instead of being an unused waste product. At the same time, energy consumption for the hot beverage makers can be reduced as they receive partially heated water (above ambient temperature) rather than water at ambient temperature.

When water is removed from the water vessel as heated water, it will need to be replaced with new cold water. In some examples the water vessel can be topped up manually. However, in other examples the water vessel may be connected to an external water supply, e.g. a separate tank or a pressurised water supply.

It will be appreciated by those skilled in the art that the heat transfer system may employ a variety of different mechanisms to transfer the waste heat from the galley chiller(s) to the water vessel. In some examples the heat transfer system may be a fluid transfer system in which a working fluid is heated by the waste heat, moved (e.g. through pipes or conduits) to the water vessel where it in turn heats the water (e.g. via a heat exchanger as discussed above). The working fluid may be a gas. However, in some examples the working fluid is a liquid. Liquids generally have higher heat capacities and can therefore absorb the waste heat more efficiently.

In some examples, where there is a plurality of galley chiller units each galley chiller unit may transfer its own waste heat separately to the water vessel, e.g. via its own individual pipes or conduits. In another set of examples, a single heat transfer system transfers heat from each of the plurality of chiller units to the water vessel. For example, a single conduit (a single closed loop) may be in heat exchange contact with all of the plurality of chiller units. For example, the heat transfer system may be arranged to connect the plurality of chiller units in series (and optionally may do so multiple times for improved heat exchange if required). In some other examples the heat transfer system may be arranged to connect the plurality of chiller units in parallel.

The heat transfer system may use a high heat capacity liquid as the working fluid to transfer the heat away from the galley chiller unit(s) to the water vessel. In some examples the heat transfer system uses water, or a water-based solution. In some such examples, the water-based solution may be predominantly water, with one or more additives, for example anti-freeze or the like may be added to reduce the freezing point of the solution for more effective cooling. In some examples the heat transfer system is a liquid closed loop system. In some examples the heat transfer management system may be capable of heating the working fluid to at least 40 degrees centigrade, optionally at least 50 degrees centigrade, optionally at least 60 degrees centigrade, optionally any temperature between 40 and 60 degrees centigrade.

Whilst fans in galley chiller systems must generally be located at the top of the back of the unit to be able to drive air out of the galley compartment, the heat transfer system of this disclosure does not require air flow, so it can be arranged to heat exchange with the chiller unit at any suitable location. This allows greater freedom in the design of the chiller units, e.g. by allowing the condenser / radiator to be located in a different place on the chiller unit. In some examples the heat transfer system may be attached behind the at least one galley unit. In some other examples the heat transfer system may be attached underneath the at least one galley unit. In another set of examples, the heat transfer system may be connected on top of the at least one galley unit.

In some examples the heat transfer system is configured to heat water in the water vessel to at least 40 degrees centigrade. In some other examples the heat transfer system is configured to heat water in the water vessel to at least 50 degrees centigrade. A hot beverage maker would previously have had to raise water temperature from ambient temperature (around 20 degrees) to around 80, 90 or 100 degrees (depending on the machine). Thus, the machine previously needed to raise the temperature of the inlet water by around 60 to 80 degrees centigrade. With the heat management system of this disclosure, the inlet water for the hot beverage dispenser(s) can be at 40 or 50 degrees which means that the hot beverage dispenser(s) only need to raise the temperature of the water by around 30 to 60 degrees. This reduces the potential amount of power used by the hot beverage dispensers, thereby providing a saving in cost, power and/or the time required to produce a hot beverage.

In some examples the heat transfer system comprises a pumping system operable to circulate a working fluid between the galley chiller unit(s) and the water vessel. In some examples there is a plurality of galley chiller units. In some examples, where each galley chiller unit separately transfers heat to the water vessel, the pumping system may comprise a plurality of pumps, one for each of the at least one galley chiller units (each pump circulating working fluid in a respective closed loop between the water vessel and the respective chiller unit). In some other examples, the pumping system may comprise a single centralised pump. The centralised pump may be arranged to circulate a working fluid in a single closed loop between each of the chiller units (e.g. arranged in series) and the water vessel. In some examples operation of the pump is externally powered (e.g. from an external power supply, e.g. via a wall socket or the like). In some other examples, the pump may be powered from the waste heat, e.g. by a thermoelectric generator. In some examples the pumping system may be continuously operated. In some examples operation of the pumping system is linked to the operation of the at least one galley chiller unit. For example, the pump may be controlled to operate only when the chiller unit is active (e.g. when the compressor is running). Many chiller units operate on a cycling basis. Driving the pump to remove heat as soon as it is generated and then shutting down the pump after heat has been extracted leads to efficiency and energy saving.

The skilled person will appreciate that the requirements for galley chiller units may vary for different vehicle types. For example, in a galley of a motorhome or houseboat a single chiller may be used, which will have similar operating requirements to a domestic fridge or freezer. However, in other vehicle types, such as an aircraft or a train (which operate on a more commercial basis rather than a private basis), galley chiller units are required to cool items much faster and therefore need to be correspondingly higher powered. Such higher powered units lend themselves particularly to the system of this disclosure due to the higher waste heat involved and also because of the more continuous use of hot beverage dispensers to make use of the heated water in the water vessel.

In some examples the or each chiller unit is configured to cool an internal volume to a predetermined temperature. In some examples, the galley chiller unit(s) may be configured to be selectively operable at different temperatures for the internal volume. For example, a chiller unit may be operable at one of two selectable temperatures, e.g. so that it can be operated as a refrigerator or as a freezer. For example, a chiller unit may be operable at a first temperature in the range -25 to -10 degrees centigrade and at a second temperature in the range 0 to 10 degrees centigrade. The (or each) chiller unit may be configured to have a rated electrical input supply power of at least 250 W. In some examples the or each chiller may have an electrical input supply power of between 250W and 500W. In other examples, the (or each) chiller unit may be configured to have an electrical input supply power of at least 500 W. Such higher-powered units are often found in commercial or industrial settings such as an aircraft galley where chilling needs to happen quickly and where more waste heat is generated.

It will also be appreciated that different environments (e.g. different vehicle types, or different galley types within a specific vehicle) will have different requirements or limitations for the size of the water vessel. In some examples the water vessel has a capacity of up to 30 litres, in some examples up to 20 litres, and in other examples up to 10 litres. In some examples the water vessel can have a capacity of at least 1 litre. In some examples the water vessel is configured to have a capacity of no more than 5 litres. It will be appreciated that in an aircraft, where it is desirable to reduce weight as much as possible, a 5 litre water vessel may be used. A smaller vessel weighs less (and it is an added component not present in existing galleys, so its weight is a consideration). A smaller vessel with a smaller volume of water also allows the water to be heated up to a higher temperature faster, thereby allowing efficient use of the waste heat from the chillers while providing a useful temperature for onward use.

In some examples the vehicle galley is an aircraft galley, and the vehicle galley heat management system is configured to be installed in an aircraft. In some other examples the vehicle is a train. In some other examples the vehicle is a boat. In some other examples the vehicle is a motorhome or houseboat.

The disclosed vehicle galley heat management system can have a reduced power requirement and/or produce less noise than conventional galley chiller systems.

It will be understood by a person skilled in the art that it is desirable in aircraft to reduce power consumption and to reduce the weight of systems on board, as any additional weight or power consumption can require more fuel. Therefore, in some examples the vehicle galley heat management system described herein is designed to be weight neutral when compared with previous galley chiller set ups. In some examples the combined weight of the galley heat management system including the chiller units, the heat transfer system and the water vessel (but excluding the weight of water in the water vessel) is less than the combined weight of traditional chiller systems including the fans. The additional weight of the water vessel and the heat transfer system (e.g. conduits and heat exchangers) can be offset against the weight of the fans and the larger and heavier condensers / radiators.

The system features described herein with respect to the galley heat management system are equally applicable to the below described method, and vice versa.

According to a second aspect of the present disclosure there is provided a method for heating water in a vehicle galley, the method comprising:
extracting heat from at least one galley chiller unit;
transferring the heat to water in a water vessel thereby heating the water.

In some examples the method further comprises: transferring the heated water to a hot beverage maker; and optionally preparing a hot beverage using the heated water.

In some examples, the transferring of the heat comprises pumping liquid in a closed loop system between the at least one galley chiller unit and the water vessel.

It will be appreciated that the above described aspects of the present disclosure may (and preferable does) include one or more (e.g. all) of the preferred and optional features disclosed herein, e.g. relating to other aspects and embodiments, as applicable.

### Detailed description

Certain preferred non-limiting examples of this disclosure will now be described, by way of example only, with reference to the accompanying drawings, in which:
FIG. 1 is a schematic diagram of a galley heat management system according to an example of the present disclosure;
FIG. 2 shows a perspective view of a vehicle galley, and galley heat management system in accordance with an example of the present disclosure;
FIG. 3 shows a flow chart representing a method of heating water in accordance with an example of the present disclosure.

It will be understood that the discussion below is exemplary only. Further, although the examples described below are discussed in relation to an aircraft galley, it will be understood that the galley heat management system of the present disclosure may be used in any vehicle galley. For example, the galley of a coach, or a train or on a boat or houseboat.

It will be understood that references made herein to the terms "front", "back", "below", "above", "top", "bottom", "higher", "lower" etc. are intended to be relative terms referring to normal orientations within an aircraft galley (the orientation shown in the Figures), with the front being normally accessible.

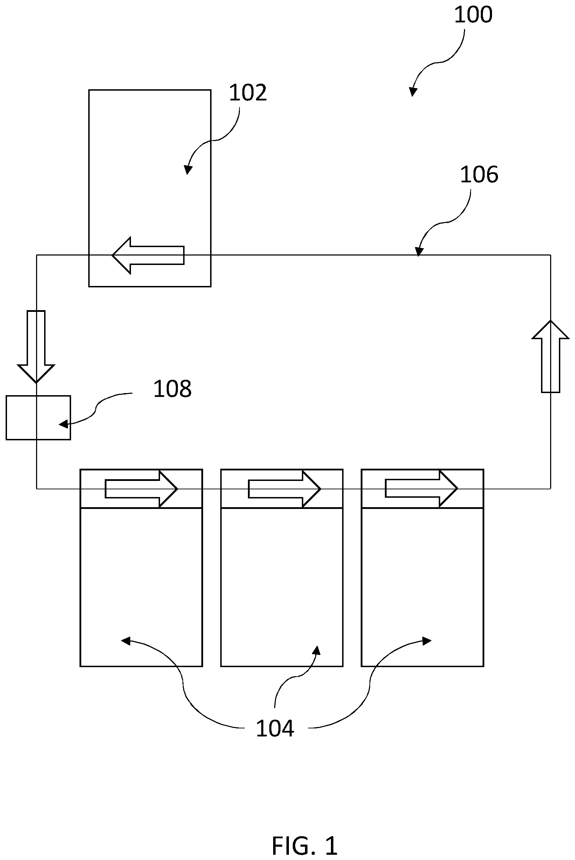

FIG. 1 shows an example galley heat management system 100, which includes three galley chiller units 104, a water vessel 102, and a heat transfer system 106. The heat transfer system 106 includes a pump 108. Heat is transferred in a closed loop and moves around the system as indicated by the arrows. The heat transfer system 106 can be connected through any reasonable part of each of the galley chiller units 104. The pump 108 acts to move heat around the closed loop system. In this example the pump 108 is located on the cold side of the system, before the flow goes through the galley chiller units 104. Although the skilled person will appreciate that the pump 108 could equally be located anywhere in the closed loop system. In this example, the heat is moved by means of a working fluid which is pumped through pipes or conduits which form the closed loop. The working fluid is heated up as it passes in heat exchange contact with the chiller units 104 (specifically with the hot parts of the chiller units 104 such as the condenser or radiator) and cools down as it passes in heat exchange contact with the water in the water vessel 102, thereby heating up the water.

The system shown in FIG. 1 has three galley chiller units 104 and the heat transfer system 106 is a single loop in heat exchange contact with all three galley chiller units. The heat transfer system 106 in this example passes the chiller units 104 in series, acquiring heat from each chiller unit 104 in turn. The skilled person will appreciate, however that other configurations for the heat transfer system 106 are also possible, for example the loop may run to each chiller unit 104 in parallel.

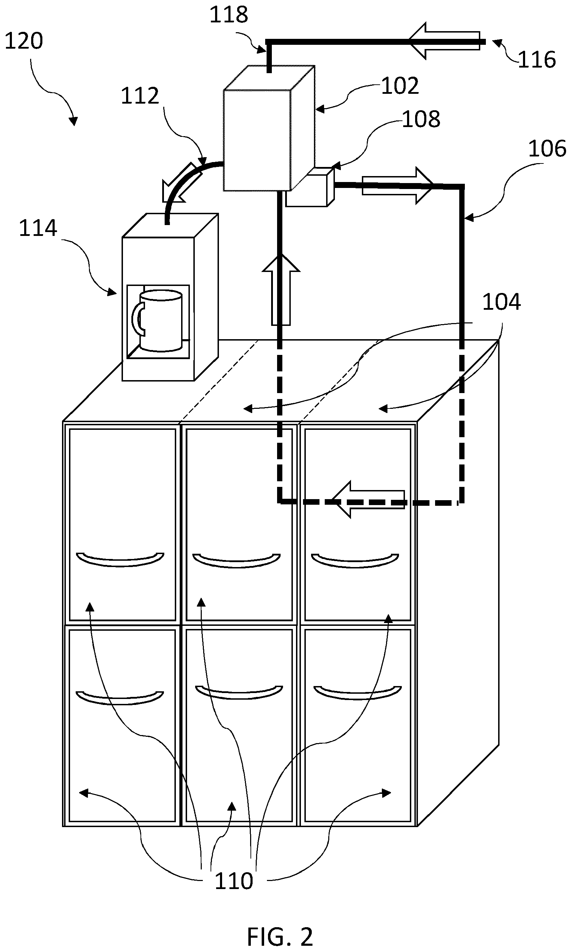

FIG. 2 shows an aircraft galley 120 with a galley heat management system similar to that of FIG. 1 installed. The galley 120 has a number of compartments 110 each of which can be used for any type of galley insert. In addition, the galley 120 has a hot beverage maker 114, e.g. a coffee machine, connected to the water vessel 102 via water supply conduit 112. The water vessel 102 is also connected to an external water supply 116 via a water inlet conduit 118.

In this example the right-hand pair at the of the top row of the compartments 120 house galley chiller units 104. A water vessel 102 is installed on the wall above the compartments 110. In other examples the water vessel 102 can be installed in its own galley compartment 110. The heat transfer system 106 runs through a pump 108 located for convenience next to the water vessel 102, although it could be located anywhere along the loop of the heat transfer system 106. In some examples the pump 108 can be integrated into the water vessel 102. In other examples, the pump 108 may be integrated into one of the chiller units 104.

In the example of FIG. 2, the heat transfer system 106 runs partially out in the open of the galley 120 (as shown by the solid lines), and partially behind the compartments (as shown by the dashed lines) for connection to the galley chiller units 104. The piping may however be integrated into the walls of the galley 120, and may be provided with insulation to prevent heat loss from the heat transfer system 106, at least in the pipes that carry fluid from the chiller units 104 to the water vessel 102.

In the example of FIG. 2, the water vessel 102 is shown to have a small volume of approximately 5 litres so as to avoid introducing unnecessary excess weight onto the aircraft. The volume of 5 litres is sufficient to hold a reservoir of heated water for supply to the beverage maker 114 and to allow sufficient heat extraction from the galley chiller units 104. It will be appreciated that larger vessels may be appropriate in other circumstances (e.g. where there are more chiller units 104. The water vessel 102, galley chiller units 104 and hot beverage maker 114 are also located in one area of the galley 120 to reduce the additional weight of any required pipework for interconnecting them, e.g. as part of the heat transfer system 106. In some other examples which are not shown here, the water vessel 102 and galley chiller units 104 are located in adjacent compartments 110, preferably arranged to allow for the shortest possible piping arrangement between the components of the galley heat management system.

It will be appreciated that an engineer may be required to install each component of the galley heat management system, e.g. to plumb the chiller units 104 into the heat transfer system 106. The plumbing (i.e. pipes and pump) of the heat transfer system 106 may be built into the galley 120 (e.g. at the time when the galley 120 is installed into the vehicle), or they may be retrofitted into an existing galley 120. Chiller units 104 may be provided separately and connected into a pre-installed heat transfer system 106.

The hot beverage maker 114 is shown on the counter-top of the galley compartments 110, but may equally be installed in its own compartment 110. The hot beverage maker 114 is connected to the water vessel, in this example via specifically installed inlet conduit 112. The pre-heated water can then be used in the hot beverage maker 114 reducing the amount of energy that the hot beverage maker has to supply to heat the water in the preparation of a beverage (e.g. tea, coffee, hot chocolate). The hot beverage maker 114 should therefore be configured to be capable of receiving pre-heated water, rather than cold water. This may for example mean ensuring that the conduit and connectors are appropriately rated for the higher temperature water inlet connection.

In some examples the water vessel 102 is provided with a dispensing port (not shown) as an alternative, or in addition to having a plumbed connection 112. The dispensing port can allow a user to fill a hot beverage maker which is located elsewhere in the galley 120 or even one that is not in the galley 120. The plumbed connection 112 may be directly to a hot beverage maker 114 as shown, or may be to a galley water outlet, from which heated water can be dispensed (for example via a tap).

The water vessel 102 will need to be topped up when heated water is withdrawn from the water vessel 102. In this example the water vessel is connected to a cold water supply 116 in the galley 120 to enable the water vessel 102 to be fed with more water.

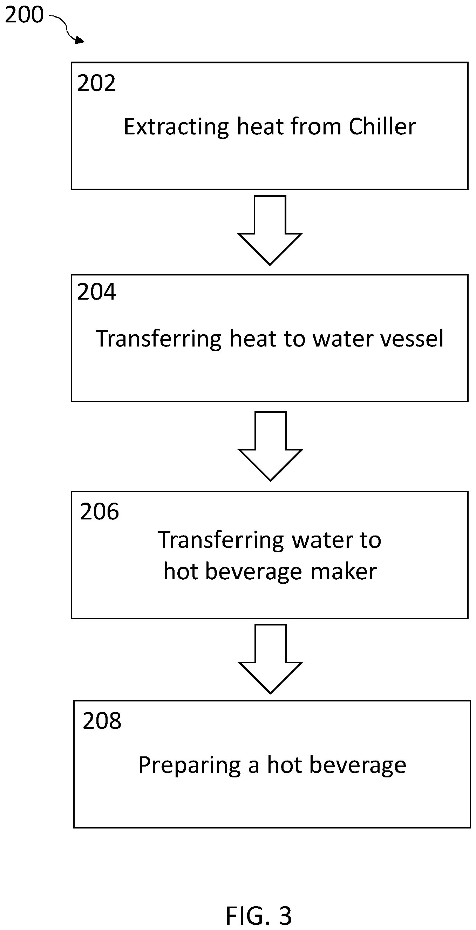

FIG. 3 shows a flow diagram representing a method 200 of heating water in a vehicle galley. At step 202 heat is extracted from a galley chiller unit for the chiller unit to cool an internal volume. At step 204 the heat is transferred away from the galley chiller unit towards a water vessel. The transferring of the heat may be performed by pumping liquid through a closed loop system. At step 206 heated water is transferred from the water vessel to a hot beverage maker. At step 208 a hot beverage is prepared, which can include further heating of the water using an electric heating element.

It will be appreciated by those skilled in the art that the disclosure has been illustrated by describing one or more specific aspects thereof, but is not limited to these aspects; many variations and modifications are possible, within the scope of the accompanying claims.

## Claims

1. A vehicle galley heat management system (100), the system comprising:
a water vessel (102);
at least one galley chiller unit (104); and
a heat transfer system (106);
wherein the heat transfer system (106) is configured to transfer heat from the or each galley chiller unit (104) to the water vessel (102).

2. A vehicle galley heat management system (100) according to claim 1, wherein the vehicle galley heat management system (100) further comprises a hot beverage maker (114) configured to receive heated water from the water vessel (102).

3. A vehicle galley heat management system (100) according to claim 1 or 2, wherein the heat transfer system (106) is a closed loop system.

4. A vehicle galley heat management system (100) according to any preceding claim, wherein the heat transfer system (106) comprises a pumping system (108) operable to circulate a working fluid between the galley chiller unit (104) and the water vessel (102).

5. A vehicle galley heat management system (100) according to claim 4, comprising a plurality of galley chiller units, and wherein the pumping system comprises of a single centralised pump (108).

6. A vehicle galley heat management system (100) according claim 4 or 5, wherein operation of the pumping system (108) is linked to the operation of the at least one galley chiller unit (104).

7. A vehicle galley heat management system (100) according to any preceding claim, wherein the or each galley chiller unit (104) is configured to cool an internal volume to predetermined temperature.

8. A vehicle galley heat management system (100) according to any preceding claim, wherein the heat transfer system (106) is configured to heat water in the water vessel (102) to at least 40 degrees centigrade.

9. A vehicle galley heat management system (100) according to any preceding claim, wherein the water vessel (102) has a capacity of up to 5 litres.

10. A vehicle galley heat management system (100) according to any preceding claim, wherein the or each galley chiller unit is configured to have a power of at least 250 Watts.

11. A vehicle galley heat management system (100) according to any preceding claim, wherein the water vessel (102) is connected to an external water supply (116).

12. A vehicle galley heat management system (100) according to any preceding claim, wherein the vehicle galley (120) is an aircraft galley, and wherein the vehicle galley heat management system (100) is configured to be installed in an aircraft.

13. A method (200) for heating water in a vehicle galley (120), the method comprising:
extracting (202) heat from at least one galley chiller unit (104);
transferring (204) the heat to water in a water vessel (102) thereby heating the water.

14. A method (200) according to claim 13, wherein the method further comprises:
transferring (206) the heated water to a hot beverage maker (114); and
preparing (208) a hot beverage using the heated water.

15. A method (200) according to claim 13 or 14, wherein the transferring (204) of heat comprises pumping liquid in a closed loop system (106) between the at least one galley chiller unit (104) and the water vessel (102).
